# EUROPEAN PATENT SPECIFICATION

(11) **EP 3 474 110 B1**
(45) Date of publication and mention of the grant of the patent: **13.05.2020**
(21) Application number: 18201652.7
(22) Date of filing: 19.10.2018
(51) Int. Cl.: G05D 1/10, B64D 1/02, B64D 1/08, G08G 5/00

(54) **A METHOD AND SYSTEM FOR AUTOMATICALLY ADJUSTING AIRDROP PARAMETERS FOR A DYNAMIC DROP ZONE**
VERFAHREN UND SYSTEM ZUR AUTOMATISCHEN EINSTELLUNG VON PARAMETERN ZUM ABWURF AUS DER LUFT FÜR EINE DYNAMISCHE ABWURFZONE
PROCÉDÉ ET SYSTÈME DE RÉGLAGE AUTOMATIQUE DES PARAMÈTRES DE LARGAGE POUR UNE ZONE DE LARGAGE DYNAMIQUE

(30) Priority: 23.10.2017 US 201715790248
(43) Date of publication of application: 24.04.2019
(73) Proprietor: Honeywell International Inc., Morris Plains, NJ 07950 (US)
(72) Inventor: PARRAS, Gerald, Morris Plains, NJ 07950 (US); KANAGARAJAN, Sivakumar, Morris Plains, NJ 07950 (US); K, Sreenivasan Govindillam, Morris Plains, NJ 07950 (US)
(74) Representative: Houghton, Mark Phillip

(56) References cited:
- EP-A1- 2 772 433
- EP-A2- 1 903 414
- FR-A1- 3 030 033
- WUEST M R ET AL: "Precision airdrop = Largage de précision", PRECISION AIRDROP = LARGAGE DE PRÉCISION; [RTO AGARDOGRAPH ; 300, VOLUME 24 - FLIGHT TEST TECHNIQUES SERIES AC/323(SCI)TP ; 125], NEUILLY-SUR-SEINE : NATO RESEARCH & TECHNOLOGY ORGANISATION , vol. 24 1 December 2005 (2005-12-01), pages 1-62, XP002541716, ISBN: 978-92-837-1153-7 Retrieved from the Internet: URL:http://www.rta.nato.int/Pubs/RDP.asp?R DP=RTO-AG-300-V24 [retrieved on 2009-08-17]

## Description

### TECHNICAL FIELD

The present invention generally relates to aircraft operations, and more particularly relates to a method and system for automatically adjusting airdrop parameters for a dynamic drop zone.

### BACKGROUND

Reinforcement and resupply of ground elements in remote locations is often accomplished by an airdrop. This may include a battlefield with pockets of friendly forces. This may also include other types of operations including humanitarian aid, disaster relief, and firefighting. In every airdrop, accuracy and precision are important. However, changing and dynamic ground conditions may affect the target drop zone. Hence, there is a need for a method and system for automatically adjusting airdrop parameters for a dynamic drop zone.

FR3030033 discloses a pattern able to be updated by an operator, the position, the orientation and/or the shape of the trajectory pattern dependent on trajectory parameters, the device comprises at least display means to view the trajectory pattern and the representation of the zone, and means for computing and storing the position data of the pattern and of the representation, the representation comprising a set of control points, the function of a control point being to define at least the value of one of the trajectory parameters, the value being dependent on the movement of the control point, a trajectory pattern modification resulting from an interaction of the operator moving at least one control point.

WUEST M R ET AL: "precision airdrop = Largage de precision" [RTO AGARDOGRAPH; 300, VOLUME 24 - FLIGHT TEST TECHNIQUES SERIES AC/323(SCI)TP;125] discloses various precision airdrop systems, in particular an automatic airdrop zone recomputing facility which can update the release point location based on sensed or operator entered changes within the aircraft's guidance and navigation systems.

EP1903414 discloses a system and method for aiding airdrop computations is described. The system includes a ground system, a data link, and an airborne system. The ground system accumulates substantially real time drop zone GPS and meteorological data, which is transferred to the airborne system via the data link. The airborne system makes adjustments to a release point of the airdrop based on the data received from the ground system. Additionally, the airborne system provides airdrop status to the ground system via the data link.

EP2772433 discloses a distribution supporting apparatus that offers support information to a pilot dropping the distribution material to efficiently distribute the distribution material. The distribution supporting apparatus includes: an input section to which information items on at least an aircraft velocity, an aircraft altitude, and a wind velocity are input; a computation section configured to compute a location at which the distribution material dropped from the aircraft arrives on the ground surface and a density distribution of the distribution material on the ground surface based on the information items input to the input section; and a display control section configured to display, on a display, the support information relating to the location and density distribution computed by the computation section.

### BRIEF SUMMARY

The present invention in its various aspects is as set out in the appended claims.

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for automatically adjusting aircraft performance parameters for use on an airdrop. The method comprises: establishing initial dimensions for a drop zone by a ground element; transmitting the initial dimensions for the drop zone from the ground element to a flight management system (FMS) of an in-flight cargo aircraft via a secure data link; continually monitoring ground-based parameters affecting the dimensions of the drop zone with the ground element; transmitting changes to the ground-based parameters from the ground element to the FMS via the secure data link; continually adjusting a computed air release point (CARP) for the airdrop with the FMS based on the changes to the ground-based parameters; and continually updating flight performance parameters for the in-flight cargo aircraft with the FMS based on the changes to the ground-based parameters.

A system is provided for automatically adjusting aircraft performance parameters for use on an airdrop. The system comprises: an in-flight cargo aircraft designated to conduct an airdrop; a ground element that establishes and transmits initial dimensions for drop zone to the in-flight cargo aircraft, where the ground element continually monitors ground-based parameters affecting the dimensions of the drop zone and transmits changes to the ground-based parameters to the aircraft via a secure communications data link; and a flight management system (FMS) on board the in-flight aircraft that receives the changes to the ground-based parameters from the ground element and adjusts a computed air release point (CARP) for the air drop based on the changes to the ground-based parameters.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of a usable drop zone in accordance with one embodiment; and
FIG.2 shows a flowchart of a method for automatically adjusting aircraft performance parameters for use on an airdrop in accordance with one embodiment.

### DETAILED DESCRIPTION

The following detailed description is merely exemplary in nature and is not intended to limit the invention or the application and uses of the invention.

A method and system for automatically adjusting aircraft performance parameters for use on an airdrop has been developed. The initial dimensions of a drop zone are established by a ground element and transmitted to an in-flight cargo aircraft. The ground element continually monitors ground-based parameters that might affect the dimensions of the drop zone. Any changes to these parameters are transmitted to the flight management system (FMS) on board the aircraft. The FMS will adjust the computed air release point (CARP) for the airdrop and update flight performance parameters for the aircraft based on the changes to the ground-based parameters.

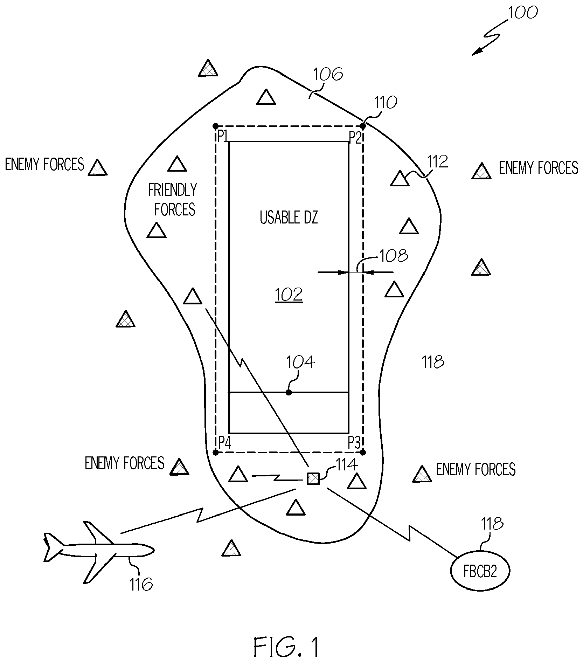

Turning now to FIG. 1, a diagram 100 of a usable drop zone 102 is shown in accordance with one embodiment. The initial dimensions of the usable drop zone 102 are first established by a ground-based element 114. The drop zone 102 is typically rectangular shaped to include a buffer distance 108 that allows for any estimated inaccuracies of airdrop performance. The ground-based element 114 may establish the dimensions of the drop zone 102 by generating four separate position points 110 to designate each corner of the rectangular shaped drop zone 102. In the alternative, the ground element may designate a desired point of impact 104 and a corresponding length and width of the rectangular shaped drop zone 102 with the desired point of impact 104 acting as a designated anchor point.

The ground element 114 will transmit the initial dimensions for the drop zone 102 to an in-flight cargo aircraft 116. The dimensions may be communicated via a secure data link that may include utilizing the Force XXI Battle Command Brigade and Below (FBCB2) communication protocol in some embodiments. After the initial dimensions are transmitted, the ground element 114 will continue to monitor ground-based parameters that may affect the dimensions of the drop zone. In this embodiment, the ground-based parameters may include the disposition of enemy forces outside a friendly area of control 106. If the ground-based parameters change, these changes are transmitted by the ground-based element 114 to the aircraft 116.

On board the aircraft 116, a flight management system (FMS) receives both the initial dimensions of the drop zone and any changes to the ground-based parameters from the ground element. The FMS continually updates a computed air release point (CARP) for the airdrop based on these changes the ground-based parameters. The CARP is a calculated point where the aircraft will begin air dropping its payload to hit the desired point of impact 104. Additionally, the FMS also updates the flight performance parameters for the aircraft itself such as altitude, airspeed, track, etc.

In some embodiments, the ground-based parameters monitored by the ground element may include: real-time weather data; real-time atmospheric data; the location of friendly forces; and the location of enemy forces. The CARP and flight parameters of the aircraft may be adjusted by the FMS for updated usable dimensions of the drop zone based on these ground-based parameters. Additionally, the CARP and flight parameters of the aircraft may be adjusted to complete the airdrop in a single pass of the aircraft or multiple passes of the aircraft. Also, the CARP and flight parameters of the aircraft may be adjusted to abort the airdrop when the usable dimensions of the drop zone become inadequate to ensure a successful airdrop within the estimated accuracy of the system (*i.e.*, inside the perimeter of the buffer zone). Other flight parameters that may be utilized by the FMS include: the number and type of personnel to be dropped; the equipment type (canister, heavy equipment, etc.); and the types of parachutes used in the airdrop.

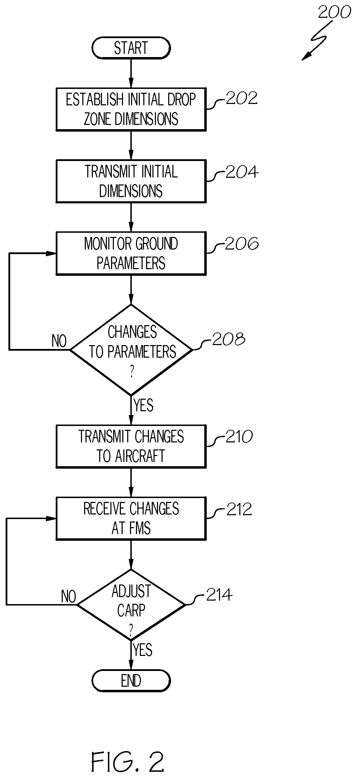

Turning now to FIG. 2, a flowchart 200 is shown of a method for automatically adjusting aircraft performance parameters for use on an airdrop in accordance with one embodiment. First, initial drop zone dimensions are established by a ground element 202 and transmitted to an FMS on board an in-flight cargo aircraft 204. The ground element continues to monitor ground parameters that may affect the drop zone dimensions 206. If there are changes to the parameters 208, the changes are transmitted to the in-flight aircraft 210 and received by its onboard FMS 212. The FMS receives the changes to the ground parameters and determines any necessary adjustments to the CARP and the flight parameters of the aircraft 214. The method continually monitors the changes to the ground parameters and continually updates the CARP and flight parameters of the aircraft as necessary.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

## Claims

1. A method for automatically adjusting aircraft performance parameters for use on an airdrop, **characterized in that** it comprises:
establishing initial dimensions for a drop zone (102) by a ground element (114);
transmitting the initial dimensions for the drop zone (102) from the ground element (114) to a flight management system, FMS, of an in-flight cargo aircraft (116) via a secure data link;
continually monitoring locations of friendly forces that affect the usable dimensions of the drop zone (102) with the ground element (114);
transmitting changes to the locations of friendly forces from the ground element (114) to the FMS via the secure data link;
continually adjusting a computed air release point, CARP, for the airdrop with the FMS based on the changes to the locations of friendly forces; and continually updating flight performance parameters for the in-flight cargo aircraft (116) with the FMS based on the changes to the locations of friendly forces.

2. The method of claim 1, where the initial dimensions for the drop zone (102) are rectangular shaped.

3. The method of claim 2, where the rectangular shaped drop zone (102) is established by defining a position point (110) for each corner.

4. The method of claim 2, where the rectangular shaped drop zone (102) is established by designating an anchor point with a designated length of the drop zone (102) and width of the drop zone (102) referenced from the anchor point.

5. The method of claim 1, where the ground-based parameters comprise real-time weather data.

6. The method of claim 1, where the CARP is adjusted for updated usable dimensions for the drop zone (102).

7. The method of claim 1, where the CARP is adjusted based on the number of personnel in the airdrop.

8. The method of claim 1, where the CARP is adjusted based on the type of equipment in the airdrop.

9. The method of claim 1, where the CARP is adjusted based on the type of parachute utilized in the airdrop.

## Patentansprüche

1. Verfahren zum automatischen Einstellen von Flugzeugleistungsparametern zur Verwendung bei einem Abwurf aus der Luft, **dadurch gekennzeichnet, dass** es umfasst:
Festlegen von Anfangsabmessungen für eine Abwurfzone (102) durch ein Bodenelement (114);
Übertragen der Anfangsabmessungen für die Abwurfzone (102) vom Bodenelement (114) zu einem Flugmanagementsystem (FMS) eines fliegenden Frachtflugzeugs (116) über eine sichere Datenverbindung;
mit dem Bodenelement (114) kontinuierliches Überwachen von Standorten von befreundeten Kräften, die die nutzbaren Abmessungen der Abwurfzone (102) beeinflussen;
Übertragen von Änderungen der Standorte der befreundeten Kräfte vom Bodenelement (114) zum FMS über die sichere Datenverbindung;
kontinuierliches Einstellen eines berechneten Luftfreisetzungspunkts (computed air release point, CARP) für den Abwurf aus der Luft mit dem FMS auf der Grundlage der Änderungen der Standorte der befreundeten Kräfte; und kontinuierliches Aktualisieren von Flugleistungsparametern für das fliegende Frachtflugzeug (116) mit dem FMS auf der Grundlage der Änderungen der Standorte der befreundeten Kräfte.

2. Verfahren nach Anspruch 1, wobei die Anfangsabmessungen für die Abwurfzone (102) rechteckig sind.

3. Verfahren nach Anspruch 2, wobei die rechteckige Abwurfzone (102) durch Definieren eines Positionspunkts (110) für jede Ecke festgelegt wird.

4. Verfahren nach Anspruch 2, wobei die rechteckige Abwurfzone (102) festgelegt wird, indem ein Ankerpunkt mit einer bestimmten Länge der Abwurfzone (102) und einer Breite der Abwurfzone (102) festgelegt wird, die vom Ankerpunkt aus referenziert werden.

5. Verfahren nach Anspruch 1, wobei die bodennahen Parameter Echtzeitwetterdaten umfassen.

6. Verfahren nach Anspruch 1, wobei der CARP auf aktualisierte verwendbare Abmessungen für die Abwurfzone (102) eingestellt wird.

7. Verfahren nach Anspruch 1, wobei der CARP auf der Grundlage der Anzahl von Mitarbeitern beim Abwurf aus der Luft eingestellt wird.

8. Verfahren nach Anspruch 1, wobei der CARP auf der Grundlage der Art der Ausrüstung beim Abwurf aus der Luft eingestellt wird.

9. Verfahren nach Anspruch 1, wobei der CARP auf der Grundlage der Art von Fallschirm eingestellt wird, die beim Abwurf aus der Luft verwendet wird.

## Revendications

1. Procédé pour régler automatiquement des paramètres de performance d'un avion à utiliser sur un largage, **caractérisé en ce qu'**il comprend :
établir les dimensions initiales d'une zone de largage (102) par un élément au sol (114) ;
transmettre les dimensions initiales de la zone de largage (102) de l'élément au sol (114) à un système de gestion de vol, FMS, d'un avion cargo en vol (116) via une liaison de données sécurisée ;
surveiller en permanence les emplacements des forces alliées qui affectent les dimensions utilisables de la zone de largage (102) avec l'élément au sol (114) ;
transmettre des changements aux emplacements des forces alliées de l'élément au sol (114) au FMS via la liaison de données sécurisée ;
ajuster en permanence un point de rejet d'air calculé, CARP, pour le largage avec le FMS en fonction des changements des emplacements des forces alliées ; et mettre à jour en permanence les paramètres de performance de vol de l'avion cargo en vol (116) avec le FMS sur la base des changements des emplacements des forces alliées.

2. Procédé selon la revendication 1, dans lequel les dimensions initiales de la zone de largage (102) sont de forme rectangulaire.

3. Procédé selon la revendication 2, dans lequel la zone de largage de forme rectangulaire (102) est établie en définissant un point de position (110) pour chaque coin.

4. Procédé selon la revendication 2, dans lequel la zone de largage de forme rectangulaire (102) est établie en désignant un point d'ancrage avec une longueur désignée de la zone de largage (102) et une largeur de la zone de largage (102) référencées à partir du point d'ancrage.

5. Procédé selon la revendication 1, dans lequel les paramètres basés au sol comprennent des données météorologiques en temps réel.

6. Procédé selon la revendication 1, dans lequel le CARP est réglé pour des dimensions utilisables mises à jour de la zone de largage (102).

7. Procédé selon la revendication 1, dans lequel le CARP est réglé en fonction du nombre de personnes dans le largage.

8. Procédé selon la revendication 1, dans lequel le CARP est réglé en fonction du type d'équipement dans le largage.

9. Procédé selon la revendication 1, dans lequel le CARP est réglé en fonction du type de parachute utilisé dans le largage.
